# EUROPÄISCHE PATENTSCHRIFT

(11) **EP 1 462 368 B1**
(45) Veröffentlichungstag und Bekanntmachung des Hinweises auf die Patenterteilung: **28.02.2007**
(21) Anmeldenummer: 03006730.0
(22) Anmeldetag: 25.03.2003
(51) Int. Cl.: B65B 13/34, F16G 11/10, B21F 15/06, B63B 21/08, B63B 21/18, B65B 27/08

(54) **Verfahren zum Umfassen eines Objektes und Einklemmblock**
Process to encircle an object and closing element
Procédé pour encircler un objet et élément de fermeture

(43) Veröffentlichungstag der Anmeldung: 29.09.2004
(73) Patentinhaber: Verein PRS PET-Recycling Schweiz, 8049 Zürich (CH)
(72) Erfinder: Mettler, Hermann, 6403 Küssnacht (CH); Lischer, Franz, 8820 Wädenswil (CH); Albrecht, Maya, 8820 Wädenswil (CH); Scacchi, Tino, 8340 Hinwil (CH)
(74) Vertreter: Blum, Rudolf Emil

(56) Entgegenhaltungen:
- DE-A- 3 337 554
- DE-U- 20 209 372
- GB-A- 2 374 896
- GB-A- 2 378 980
- US-A- 3 574 900
- US-A- 3 864 790
- US-A1- 2003 005 557

## Beschreibung

Die Erfindung betrifft ein Verfahren zum Umfassen gemäss Anspruch 1. Ferner betrifft die Erfindung einen Einklemmblock mit an Nutenwänden schräg verlaufenden Greifgliedern für ein schnurförmiges Element gemäss Oberbegriff des Anspruchs 9.

Es ist bekannt, beim Umfassen eines Objektes mit einem schnurförmigen Umfassungsmittel dieses zu verknoten, z.B. beim Umfassen eines Paketes mit einer Schnur. Bei der automatischen Ausführung dieses Vorganges benötigt der entsprechende Mechanismus relativ viel Platz. Es ist bei dazu geeignetem Umfassungsmittel auch möglich, dieses zu verschweissen. Wirken indes hohe Kräfte auf das Umfassungsmittel, so kann die Verschweissung eine zu wenig feste Verbindung darstellen. Einklemmblöcke sind z.B. aus US-A-3,574,900 bekannt. Ferner ist eine Seilfixierung aus US-A-2003/0005557 bekannt.

Der Erfindung liegt daher die Aufgabe zugrunde ein Verfahren zum Umfassen eines Paketes zu schaffen, welches diese Nachteile nicht aufweist.

Dies wird beim eingangs genannten Verfahren dadurch erzielt, dass die Endbereiche des schnurförmigen Umfassungsmittels in je einem Einklemmbereich eines Einklemmblocks mit mindestens zwei Einklemmbereichen fixiert werden, derart, dass der Einklemmblock die Endbereiche zueinander fixiert hält.

Ein Einklemmblock ist ein bekanntes Element, in dem eine Schnur oder ein Seil auf einfache Weise eingeführt werden kann und dann festgehalten wird. Es wird nun neu ein Einklemmblock mit mindestens zwei Einklemmbereichen verwendet, um die Endbereiche eines Umfassungsmittels beim Umfassen bzw. Verpacken eines Objektes zu halten bzw. das Umfassungsmittel zu verschliessen. Das einfache Einlegen des Umfassungsmitels in den jeweiligen Einklemmbereich ergibt eine einfache Handhabung, die auch einfach und platzsparend mechanisierbar ist. Mittels des Einklemmblocks lassen sich auch hohe Zugkräfte auf das Umfassungsmittel aufnehmen.

Bei einem bevorzugten Ausführungsbeispiel ist die Festhalterichtung beider Einklemmbereiche dieselbe. Das Umfassungsmittel wird dabei beim Verlassen des Einklemmblockes im wesentlichen rechtwinklig umgelenkt. Dies ergibt eine erhöhte Festigkeit der Verbindung. Bevorzugt ist zudem im Umlenkbereich eine Kerbe zur Aufnahme des Umfassungsmittels vorgesehen.

Bei einem weiteren Ausführungsbeispiel ist die Festhalterichtung der Einklemmbereiche einander entgegengesetzt.

Das Verfahren wird beim Umfassen eines gepressten Paketes aus leeren Kunststoff-Behältern, insbesondere PET-Flaschen ausgeführt. Es ist bekannt, solche Behälter bzw. Flaschen in einer Presse in Paketform zu pressen, um eine platzsparende Verpackungseinheit zum Transport zur Wiederverwertung zu schaffen. Das Umfassen mit einem Umfassungsmittel erfolgt dabei in gepresstem Zustand, wobei bei Entlastung des Paketes bei der Entnahme aus der Presse durch die Rückstellkraft der Behälter eine hohe Kraft auf das Umfassungsmittel ausgeübt wird. Dieses muss an der Verbindungsstelle der Enden der Umfassungsmittelabschnitte dieser Kraft gewachsen sein, zur mechanisierten Anbringung geeignet und ferner kostengünstig sein und den Recyclingvorgang der Behälter nicht stören.

Das Verfahren mit einem Einklemmblock zum Verbinden der Endbereiche eines schnurförmigen Umfassungsmittels löst diese Aufgabe.

Der Erfindung liegt weiter die Aufgabe zugrunde, einen Einklemmblock zu schaffen, der für das Verfahren geeignet ist.

Diese Aufgabe wird gemäss Anspruch 9 gelöst.

Einklemmblöcke in einfacher Ausgestaltung mit einem Einklemmbereich sind bekannt und finden z.B. im Segelsport zum Festhalten von Seilen Verwendung. Z.B. zeigen die Dokumente EP-A-0 018 074, DE-A-196 12 214, US-A-3 574 900 und US-A-5 522 120 Einklemmblöcke. Das Dokument US-A-4 935 993 zeigt einen Einklemmblock zum Festhalten eines Schnürsenkels. Aus US-A-3,574,900 ist auch ein Einklemmblock mit zwei Einklemmbereichen bekannt.

Der erfindungsgemässe Einklemmblock weist demgegenüber mindestens zwei separate Einklemmbereiche und die Stege auf, insbesondere mit in gleicher Richtung wirksamer Festhalterichtung für das schnurförmige Element. Auch die einander entgegengesetzte Festhalterichtung ist möglich.

Bevorzugterweise weist der Einklemmblock am Nutenausgang zur jeweiligen Nut im wesentlichen rechtwinklig stehende Kerben im wesentlichen auf Höhe des Nutengrundes auf, um bei einer Abwinkelung des schnurförmigen Elementes dieses aufzunehmen.

Weiter ist der Einklemmblock vorzugsweise aussen seitlich verstärkt und weiter auch gut stapelbar ausgebildet.

Im folgenden werden Ausführungsbeispiele der Erfindung und der Stand der Technik anhand der Figuren näher erläutert. Dabei zeigt
Figur 1a und Figur 1b einen Einklemmblock nach Stand der Technik;
Figur 2 ein erstes Beispiel eines Einklemmblocks gemäss der Erfindung;
Figur 3 den Einklemmblock gemäss Figur 2 in Ansicht von oben;
Figur 4 den Einklemmblock von Figur 2 in frontaler Ansicht;
Figur 5 ein weiteres Ausführungsbeispiel eines Einklemmblocks;
Figur 6 den Einklemmblock von Figur 5 in Ansicht von oben;
Figur 7 den Einklemmblock von Figur 5 in frontaler Ansicht.

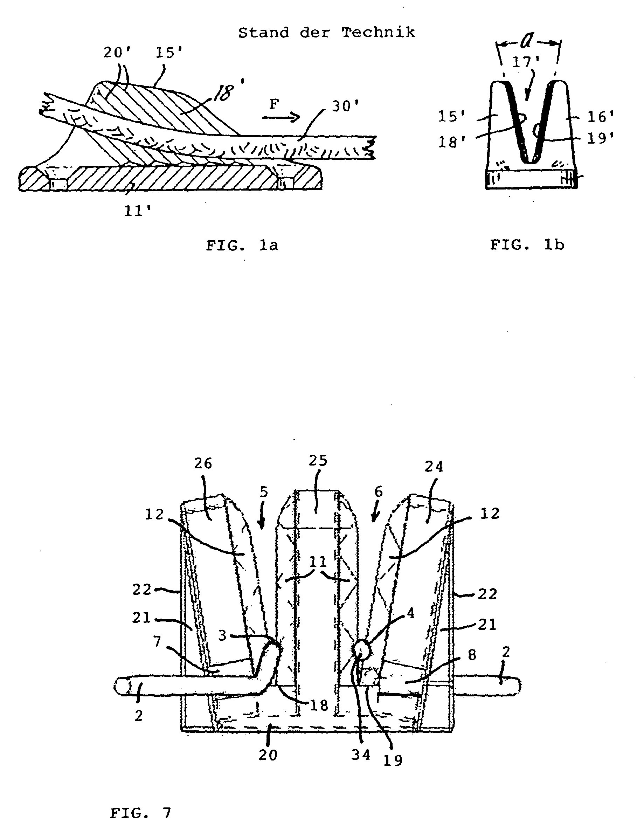

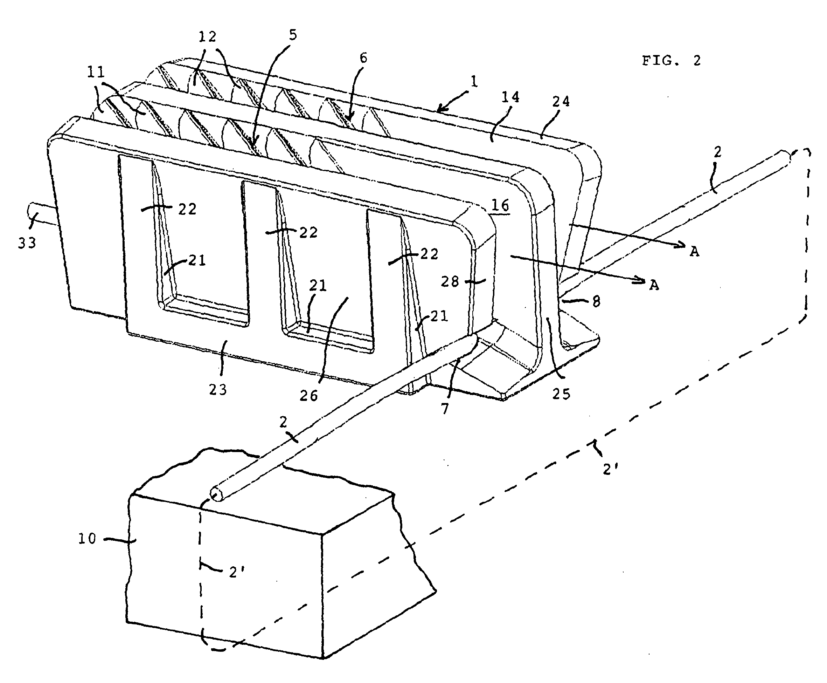

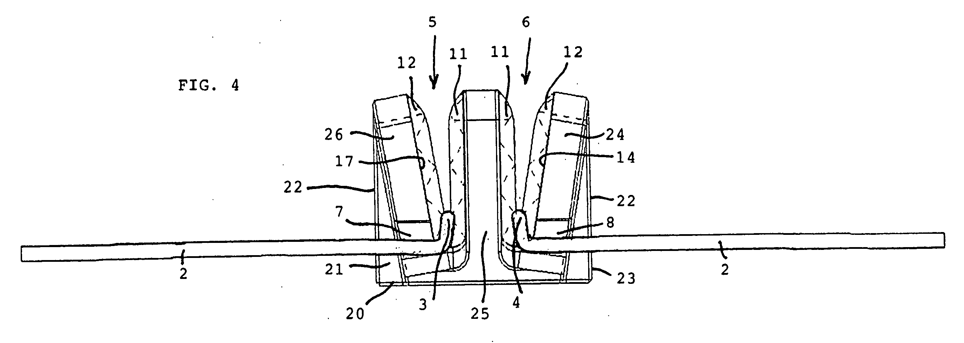

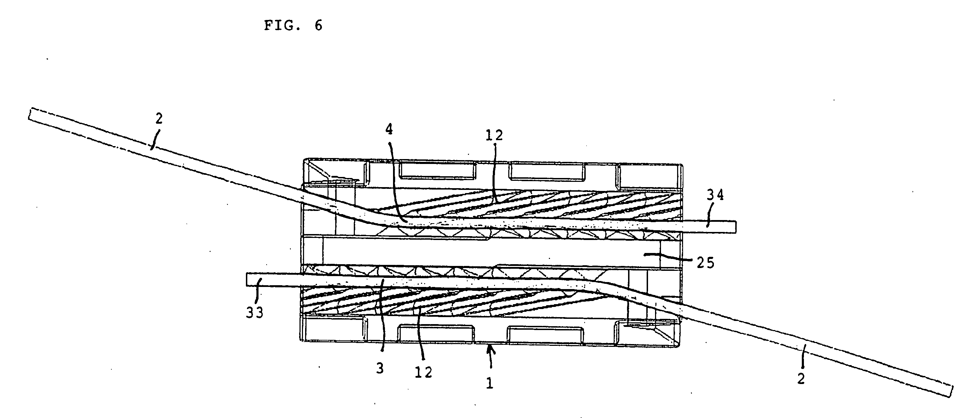

Die Figuren 1a und 1b zeigen einen bekannten Einklemmblock nach Stand der Technik gemäss EP-A-0 018 074 zur kurzen Erläuterung der Funktion eines solchen bekannten Einklemmblockes. Derartige Einklemmblöcke sind zudem z.B. aus DE- A-196 12 214, US-A-5 522 120 sowie US-A-5 158 428 bekannt. Die nachfolgend anhand den Figuren 2 bis 7 erläuterten erfindungsgemässen Einklemmblöcke können in Ausführungsformen auch Merkmale aus den genannten Dokumenten enthalten. Figur 1a zeigt einen Einklemmblock nach Stand der Technik in einem Vertikallängsschnitt und Figur 1b zeigt eine Frontalansicht. Es ist ersichtlich, dass der Einklemmblock zwei von einer Grundplatte 11' unter Bildung einer Nut 17' aufragende Seitenwände 15' und 16' mit Innenflächen 18', 19' aufweist, an welchen zum Grund der Nut schräg geneigt angeordnete Rippen 20' vorgesehen sind, die Greifglieder für ein in den Einklemmblock eingeführtes Seil oder eingeführte Schnur 30' bilden. Zur Befestigung einer solchen Schnur im Einklemmblock genügt es dabei die Schnur in die Nut einzulegen und sie in Richtung des Pfeiles F zu ziehen, wodurch sie durch die schräg gerichteten Greifglieder in die Nut zum Nutengrund hineingezogen und durch die Greifglieder festgeklemmt und schlussendlich fixiert wird. Es ergibt sich eine gegen weitere Zugkraft in Richtung F stabile Befestigung der Schnur 30' am Einklemmblock. Dieses ist bekannt und wird nachfolgend bei den erfindungsgemässen Einklemmblöcken nicht mehr im einzelnen beschrieben.

Die Figuren 2 bis 4 zeigen ein erstes Ausführungsbeispiel eines erfindungsgemässen Einklemmblockes und des erfindungsgemässen Verfahrens. Gemäss diesem wird ein Objekt 10, welches in den Figuren 2 bis 4 nur teilweise angedeutet ist, durch ein im wesentlichen schnurförmiges Umfassungsmittel 2 umfasst. Dies bedeutet, dass das Objekt 10 entlang einer Umfangslinie des Objektes 10 um dieses herumgeführt wird und die beiden Endbereiche des Umfassungsmittels miteinander verbunden werden, so dass sich das Umfassungsmittel 2 um das Objekt 10 herum an dieses anlegt und dieses in der Regel zusammenhält. Das Objekt 10 kann dabei ein beliebiges Bündel oder Paket sein, welches vom Umfassungsmittel 2 mehr oder weniger locker zusammengehalten wird. Die beanspruchte Anwendungsart, bei welcher das Objekt 10 ein Paket aus besonderen Gegenständen ist wird nachfolgend noch erläutert. In der Figur ist lediglich ein Teil des schnurförmigen Umfassungsmittels 2 in einem zum Einklemmblock 1 passenden Grössenverhältnis dargestellt. Im weiteren ist in der Figur das Umfassungsmittel um das angedeutete Objekt 10 herum nur als unterbrochene Linie 2' dargestellt, um die Zeichnung zu vereinfachen. Das schnurförmige Umfassungsmittel 2 kann dabei eine beliebige Schnur oder ein Seil sein, angepasst an die bei der Umfassung des Objektes 10 auftretenden Kräfte. Unter im wesentlichen schnurförmig wird hier für das Umfassungsmittel auch ein Band verstanden, wenn seine Dicke so gewählt ist, dass es, wie eine Schnur, in einem Einklemmblock fixiert werden kann.

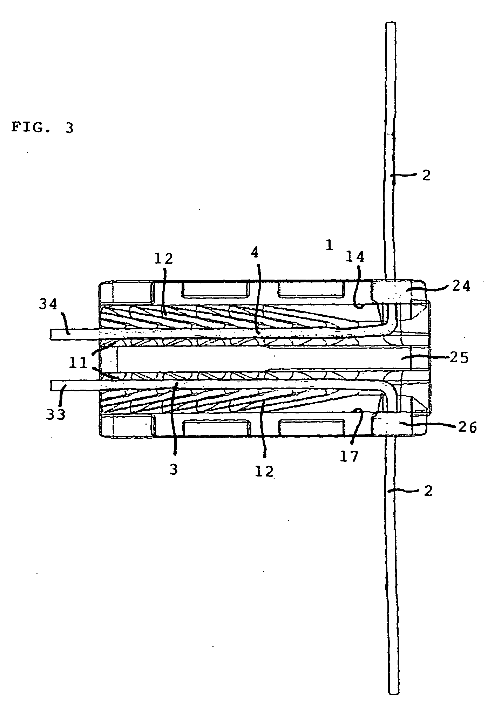

Die Endbereiche 3 und 4 des Umfassungsmittels 2 sind nun in einem Einklemmblock 1 mit zwei Einklemmbereichen 5 und 6 fixiert. Dadurch wird das Umfassungsmittel mit seinen beiden Enden zu einer Einheit verbunden, so dass sich eine vollständige, um das Objekt 10 gelegte Umfassung ergibt. Die Endbereiche 3 und 4 des Umfassungsmittels 2 können dabei von Anfang an freie Enden sein, indem das Umfassungsmittel 2 ein auf die notwendige Umfassungslänge und Einklemmung bereits abgelängtes Umfassungsmittel ist, oder die freien Enden oder eines der freien Enden kann bei der Umfassung und Fixierung oder nach der Umfassung und Fixierung erst gebildet werden, indem das Umfassungsmittel von einem Vorrat entsprechend abgeschnitten wird. Bei einer bevorzugten Ausgestaltung, bei welcher ein mechanisiertes Umfassen des Objektes 10 und Befestigen im Einklemmblock 1 erfolgt, wird so vorgegangen, dass ein durch eine vorgängige Schneidoperation gebildetes freier Endbereich 3 in den Einklemmblock 1 eingelegt und dort fixiert wird, wonach Umfassungsmittel 2 von einem Vorrat abgezogen und durch ein mechanisch angetriebenes Glied um das Objekt 10 herumgeführt wird, wiederum zum Einklemmblock geführt wird und dort in einen zweiten Einklemmbereich eingelegt wird, worauf das Umfassungsmittel 2 etwas aus dem Einklemmblock herausragend abgeschnitten wird, so dass für die nächste Operation wieder ein freies Ende des Vorrates entsteht. Beim Einklemmblock ergeben sich zwei kurze aus ihm herausragende Schnurenden, wie dies in Figur 3 mit den Schnurenden 33 und 34 der Endbereiche 3 bzw. 4 gezeigt ist.

Der in den Figuren 2 bis 4 gezeigte Einklemmblock 1 weist zwei Einklemmbereiche 5 und 6 auf, welche jeweils auf bekannte Weise mit zum Nutengrund hin schräg verlaufenden Greifgliedern bzw. Rippen 11 und 12 versehen sind, so dass in der jeweiligen Nute mit dem Nutengrund 18 bzw. 19 eine Schnur festgehalten werden kann. Bei dem gezeigten Beispiel sind beide Einklemmbereiche 5 und 6 des Einklemmblockes gleichartig ausgeführt, so dass die Schnur bzw. das Umfassungsmittel 2 mit ihren Endbereichen 3 bzw. 4 gegen ein Herausziehen in Richtung jeweils des Pfeiles A fixiert ist. Eine Fixation ergibt sich dabei auf grundsätzlich bekannte Weise, wenn die Schnur in den Einklemmbereich 5 bzw. 6 eingelegt und um einen geringfügigen Betrag in Richtung des Pfeiles A gezogen wird, so dass sie von den Greifgliedern 11 bzw. 12 erfasst und nach unten hin zum Nutengrund bewegt und eingeklemmt wird. Für den bei der Umfassung zunächst eingelegten und fixierten Endbereich, z.B. den Endbereich 3 ergibt sich diese Fixation durch ein entsprechendes Ziehen an der Schnur 2 von Hand oder bei mechanischer Ausführung durch das Glied, das die Schnur 2 um das Objekt 10 herumlegt. Bei der Einführung des zweiten Endes bzw. des Endbereiches 4 ergibt sich dies, in dem die Schnur 2 unter einer gewissen Spannung um das Objekt 10 herumgeführt wird, so dass sie dadurch nach dem Einlegen in den Einklemmbereich 6 wieder etwas in Richtung A zurückgezogen wird, was zur Fixation im Einklemmbereich 6 genügt. Nicht nötig ist dies bei Objekten 10, die unter einem Pressdruck stehen und dabei umfasst werden und sich nach Wegnahme des Pressdruckes ausdehnen wollen. Dabei wird durch die Ausdehnung ein Zug in Richtung A auf den Endbereich bzw. die Endbereiche des Umfassungsmittels 2 ausgeübt, der diesen bzw. diese in den Einklemmbereich 6 bzw. 5 und 6 hineinzieht und dort fixiert. Dies wird nachher noch anhand der bevorzugten Anwendung des Verfahrens erläutert.

Der Einklemmblock 1 gemäss der Erfindung weist mindestens zwei Einklemmbereiche auf, wie dies in den Figuren 2 bis 4 gezeigt ist. Es könnten auch noch weitere Einklemmbereiche vorgesehen sein, wodurch mittels desselben Einklemmblockes noch weitere Umfassungsmittel um das Objekt 10 gelegt und befestigt werden könnten. Bevorzugt ist indes ein Einklemmblock 1 mit genau zwei Einklemmbereichen, wie gezeigt. Bei dem dargestellten Ausführungsbeispiel, bei welchem beide Einklemmbereiche 5 und 6 gleichartig oder, wie dargestellt, genau gleich geneigte Greifglieder 11 und 12 aufweisen, ergibt sich bei der Umhüllung eines Objektes 10 eine Abwinkelung der Schnur 2 beim Austreten aus der Einklemmnut des Einklemmblockes 1. Bei dem Ausführungsbeispiel der Figuren 2 bis 4 erfolgt diese Abwinkelung um 90°, was durch die Umlenkung sogar noch das Festhalten der Schnur im Einklemmblock unterstützt. Bevorzugterweise ist am jeweiligen Ende des Einklemmbereiches 5, 6 bzw. der Einklemmnut an welchem die Schnur 2 zur Umfassung aus dem Einklemmblock austritt bzw. in ihn eintritt, jeweils eine Kerbe 7 bzw. 8 vorgesehen, in welche die Schnur durch die auf sie einwirkende Zugkraft hineingezogen wird. Ein Hineingleiten der Schnur in diese Kerbe bei der mechanisierten Befestigung der Schnur im Einklemmblock 1 kann noch unterstützt werden, indem die jeweilige Stirnseite 28 der Seitenwände 24 bzw. 26, welche die jeweilige Einklemmnut gegen aussen begrenzen, zur Kerbe hin geneigt ist, wie dies in der Figur ersichtlich ist. In dem gezeigten Ausführungsbeispiel ist der Einklemmblock 1 derart ausgeführt, dass er drei Wände bzw. Stege 24, 25 und 26 aufweist, wobei die Wand 25 als Mittelsteg beiden Einklemmnuten bzw. Bereichen 5 und 6 gemeinsam ist und die beiden anderen Wände 24 und 26 die jeweilig zweite Wand des Einklemmbereiches bilden. Die Innenwandung 14 des Steges 24 und die Wandung 15 des Mittelsteges 25 bilden dabei die eine Nut, die andere Wandung 16 des Mittelsteges und die Innenwandung 17 des Steges 26 die andere Nut, bzw. die entsprechenden Einklemmbereiche 5 und 6. Sofern mehr als zwei Einklemmnuten vorgesehen sind, sind natürlich auch entsprechend mehr Wandteile vorgesehen, welche die entsprechenden Nuten bilden. Die Wände 24, 25 und 26 gehen von einer gemeinsamen Basis mit einer Grundfläche 20 aus. Die beiden Seitenwände 24 und 26 sind bevorzugterweise mit Verstärkungen versehen, welche im gezeigten Beispiel als aussen angeformte Rippen 21 vorgesehen sind. Bevorzugterweise sind weiter Flächen 22 und 23 vorhanden, welche senkrecht zur Basis 20 stehen und es damit erlauben Einklemmblöcke mit ihren entsprechenden Seitenflächen 22, 23 aneinander anliegend z.B. in einem Magazin zu stapeln, was bei der mechanischen Umfassung eines Objektes vorteilhaft ist, da dadurch jeweils der benötigte Einklemmblock 1 durch die Umfassungsvorrichtung aus dem Magazin entnommen werden kann.

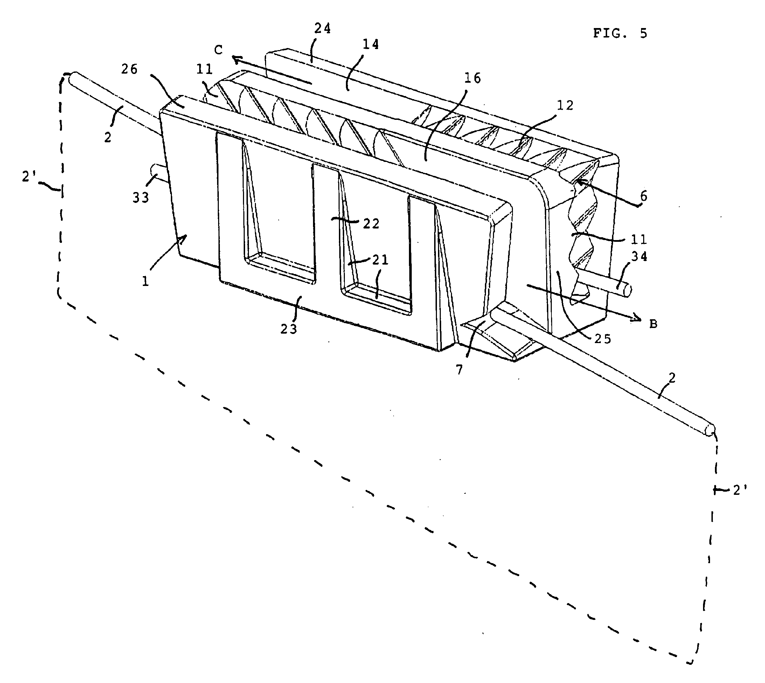

Die Figuren 5 bis 6 zeigen eine weitere Ausführungsform, wobei funktionell gleiche Elemente wie bis anhin mit denselben Bezugszeichen bezeichnet sind. Das schnurförmige Umfassungsmittel 2 ist dabei wiederum nur teilweise als solches dargestellt und des weiteren nur als unterbrochene Linie 2' um die Umfassung eines nicht dargestellten Objektes darzustellen. Der Unterschied zu der vorhergehenden Ausführungsform besteht darin, dass die beiden Einklemmbereiche 5 und 6 im Ausführungsbeispiel der Figuren 5 bis 7 einander entgegengesetzte Festhalterichtungen für das Umfassungsmittel 2 besitzen. So wird das Umfassungsmittel 2 im Einklemmbereich 5 gegen Zug in Richtung des Pfeiles B festgehalten, im Einklemmbereich 6 gegen Zug in Richtung des Pfeiles C. Die freien Enden 33 bzw. 34 des Umfassungsmittels weisen daher in diesem Fall auch nicht in die gleiche, sondern in entgegengesetzte Richtung.

Die Anwendung des Umfassungsverfahrens bzw. des Einklemmblockes gemäss der Erfindung liegt im Umfassen von gepressten Paketen aus leeren Kunststoff-Behältern bzw. PET-Flaschen. Das Bilden von solchen Paketen in einer Presse und das Umfassen der gepressten Pakete im gepressten Zustand mit einem Umfassungsmittel ist dabei aus der europäischen Patentanmeldung Nr. 01 124 371.4 sowie auch aus den japanischen Dokumenten JP-A-2000 095219, JP-A-2001 259 893 und JP-A-2001 087 894 grundsätzlich bekannt. Ein Verschnüren der Umfassungsmittel ist indes aufwändig und eine Verschweissung kann unter Umständen der hohen Rückstellkraft des gepressten Paketes beim Entlasten vom Pressdruck nicht standhalten. Es hat sich gezeigt, dass durch das vorliegende erfindungsgemässe Verfahren bzw. durch Einklemmblöcke gemäss der Erfindung ein kostengünstiges und gut mechanisierbares Umfassen solcher Pakete aus gepressten Behältern möglich ist, wobei die Umfassung ein sicheres Halten des Umfassungsmittels auch bei hohen auf diese wirkenden Kräften ermöglicht. Die mechanisierte automatische Verwendung ist dabei einfach lösbar. Der das Umfassungsmittel 2 um das Paket herumführende Greiferfinger der Umfassungseinrichtung als mechanischer Zubringer für die Schnur legt das freie Schnurende zunächst in den einen Greifbereich des Einklemmbocks ein und fixiert es dort allenfalls durch ein leichtes Ziehen an der Schnur,
welche er anschliessend um das gepresste Paket herumführt. Danach erfolgt das Einlegen in den zweiten Einklemmbereich und das Abschneiden der Schnur. Der Finger behält dabei das zum Schnurvorrat gehörende Ende und ist bereit für den nächsten Umfassungsvorgang. Die abgeschnittene, das Paket umfassende und in den Einklemmbereichen gehaltene Schnur wird beim Entlasten des Paketes vom Pressdruck der Presse bzw. durch die das Paket aufweitende Rückstellkraft noch etwas aus dem Einklemmbereich herausgezogen und damit durch die bekannte Funktion des Einklemmblockes in diesem noch besser fixiert. Um ein gepresstes Paket können dabei mehrere, z.B. drei Umfassungsmittel herumgelegt und jeweils mit einem der erfindungsgemässen Einklemmblöcke fixiert werden. Die Einklemmblöcke werden z.B. aus einem Magazin an die Einführstelle für die Schnurendbereiche zugeführt und bis zum beendeten Einlegen der Schnur dort gehalten.

## Patentansprüche

1. Verfahren zum Umfassen von in Paketform gepressten leeren Kunststoff-Behältern, insbesondere PET-Flaschen, mit einem schnurförmigen Umfassungsmittel (2, 2'), welches um das Paket (10) herumgeführt wird, wobei die Endbereiche (3, 4) des schnurförmigen Umfassungsmitels (2, 2') in je einen Einklemmbereich (5, 6) eines Einklemmblocks (1) mit mindestens zwei separaten Einklemmbereichen (5, 6) eingeführt und darin festgehalten werden, wodurch der Einklemmblock die Endbereiche zueinander fixiert hält.

2. Verfahren nach Anspruch 1, **dadurch gekennzeichnet, dass** die Endbereiche (3, 4) im Einklemmblock gegen Zug in der selben Richtung A festgehalten werden.

3. Verfahren nach Anspruch 1, **dadurch gekennzeichnet, dass** die Endbereiche (3, 4) im Einklemmblock gegen Zug in verschiedene Richtungen, insbesondere entgegengesetzte Richtungen B, C festgehalten werden.

4. Verfahren nach einem der Ansprüche 1 bis 3, **dadurch gekennzeichnet, dass** das Einführen der Endbereiche (3, 4) des Umfassungsmittels in die Einklemmbereiche (5, 6) des Einklemmblocks durch mindestens einen mechanischen Zubringer automatisch erfolgt.

5. Verfahren nach einem der Ansprüche 1 bis 4, **dadurch gekennzeichnet, dass** dass das Umfassungsmittel beim Austritt aus dem Einklemmbereich abgewinkelt wird und insbesondere um ca. 90° umgelenkt wird.

6. Verfahren nach Anspruch 5, **dadurch gekennzeichnet, dass** bei der Abwinkelung oder Umlenkung das Umfassungsmittel mindestens teilweise in einer Kerbe (7, 8) des Einklemmblocks verläuft.

7. Verfahren nach einem der Ansprüche 1 bis 6, **dadurch gekennzeichnet, dass** mehrere Einklemmblöcke gestapelt gehalten und nacheinander zu den umfassenden Objekten zugeführt werden.

8. Verfahren nach einem der Ansprüche 1 bis 7, **dadurch gekennzeichnet, dass** mindestens ein Umfassungsmittel (2, 2') im gepressten Zustand des Paketes (10) um dieses herumgeführt und mit den Endbereichen im Einklemmblock (1) fixiert wird.

9. Einklemmblock (1) zur Durchführung des Verfahrens nach einem der Ansprüche 1 bis 8, mit an Nutenwänden (14 - 17) desselben schräg zum Nutengrund (18, 19) hin verlaufenden Greifgliedern (11, 12), wobei der Einklemmblock (1) mindestens zwei separate, von separaten Nuten (14, 15, 18; 16, 17, 19) mit Greifgliedern (11, 12) gebildete Einklemmbereiche (5, 6) aufweist, **dadurch gekennzeichnet, dass** der Einklemmblock drei von einer Grundfläche (20) abstehende Stege (24, 25, 26) aufweist, welche zwischen sich die Einklemmbereiche (5, 6) bilden.

10. Einklemmblock nach Anspruch 9, **dadurch gekennzeichnet, dass** die Greifglieder (11, 12) der beiden Einklemmbereiche (5, 6) in im Wesentlichen gleicher Richtung zur Nutengrundfläche schräg gestellt sind.

11. Einklemmblock nach Anspruch 9, **dadurch gekennzeichnet, dass** die Greifglieder (11, 12) der beiden Einklemmbereiche in im Wesentlichen entgegengesetzter Richtung zur Nutengrundfläche schräg gestellt sind.

12. Einklemmblock nach einem der Ansprüche 9 bis 11, **dadurch gekennzeichnet, dass** dieser mindestens eine Kerbe (7, 8) aufweist, die an der jeweiligen Austrittsstelle des Einklemmblockes sich abgewinkelt zum Verlauf der Nut erstreckend, insbesondere sich im Wesentlichen rechtwinklig zum Verlauf der Nut erstreckend, angeordnet ist.

13. Einklemmblock nach einem der Ansprüche 9 bis 12, **dadurch gekennzeichnet, dass** dessen äussere Seitenwände (24, 26) mit Verstärkungsrippen (21) versehen sind.

14. Einklemmblock nach einem der Ansprüche 1 bis 13, **dadurch gekennzeichnet, dass** dieser aussen mit Führungsflächen (22, 23) versehen ist, die am Block seitlich mindestens eine im Wesentlichen senkrecht zur Bodenfläche (20) stehende Ebene definieren.

15. Einklemmblock nach Anspruch 9, **dadurch gekennzeichnet, dass** mindestens eine Stirnseite (28) einer der beiden äusseren Stege (24, 26) einen zur Grundfläche schräg stehenden Verlauf aufweist, derart, dass ein an der Stirnseite unter Zug anliegendes schnurförmiges Element (2) in Richtung auf die Grundfläche (20) geführt wird.

## Claims

1. Method for bundling empty plastic containers, especially PET-bottles, that are compacted into package form, with a string-like bundling means (2, 2') that is guided around the package (10), whereas the end regions (3, 4) of the string-like bundling means (2, 2') are in each case inserted into and held fast in a clamping region (5, 6) of a clamping block (1) having at least two clamping regions (5, 6), whereby the clamping block holds the end regions fixed to each other.

2. Method according to claim 1, **characterized in that** the end regions (3, 4) are held fast in the clamping block against pulling in the same direction A.

3. Method according to claim 1, **characterized in that** the end regions (3, 4) are held fast in the clamping block against pulling in different directions, in particular opposite directions B, C.

4. Method according to one of the claims 1 to 3, **characterized in that** the insertion of the end regions (3, 4) of the bundling means into the clamping regions (5, 6) of the clamping block takes place automatically through at least one mechanical feeder.

5. Method according to one of the claims 1 to 4, **characterized in that** the bundling means is bent at the emergence from the clamping block, in particular is deflected by approximately 90°.

6. Method according to claim 5, **characterized in that** at the point of the bending or deflection the bundling means runs at least partially in a notch (7, 8) of the clamping block.

7. Method according to one of the claims 1 to 6, **characterized in that** several clamping blocks are held in a stacked manner and are fed one after another to the objects to be bundled.

8. Method according to one of the claims 1 to 7, **characterized in that** at least one bundling means (2, 2') is guided around the package in its compacted state (10) and fixed in the clamping block (1) by the end regions.

9. Clamping block (1) for application of a method according to one of the claims 1 to 8, with gripping elements (11, 12) running on groove walls (14 - 17) of the clamping block in an oblique manner to the groove base (18, 19), whereas the clamping block (1) displays at least two separate clamping regions (5, 6) formed by separate grooves (14, 15, 18; 16, 17, 19) with gripping elements (11, 12). **characterized in that** the clamping block displays three bridges (24, 25, 26) protruding from a base surface (20), between which bridges are formed the clamping regions (5, 6).

10. Clamping block according to claim 9, **characterized in that** the gripping elements (11, 12) of the two clamping regions (5, 6) are positioned obliquely with respect to the groove base surface in essentially the same direction.

11. Clamping block according to claim 9, **characterized in that** the gripping elements (11, 12) of the two clamping regions are positioned obliquely with respect to the groove base surface in essentially opposite directions.

12. Clamping block according to one of the claims 9 to 11, **characterized in that** this clamping block displays at least one notch (7, 8) that is arranged at the respective emergence point of the clamping block so as to extend in a angled manner with respect to the course of the groove, in particular extending at an essentially right angle with respect to the course of the groove.

13. Clamping block according to one of the claims 9 to 12, **characterized in that** the outer side walls (24, 26) of the clamping block are provided with reinforcement ribs (21).

14. Clamping block according to one of the claims 1 to 13, **characterized in that** this clamping block is provided on the outside with bearing surfaces (22, 23), that define laterally on the block at least one plane that is essentially perpendicular in relation to the base surface (20).

15. Clamping block according to claim 9, **characterized in that** at least one front side (28) of one of the two outer bridges (24, 26) has a course that runs obliquely in relation to the base surface, such that a string-like element (2) resting against the front end under tension is guided in the direction of the base surface (20).

## Revendications

1. Procédé de cerclage de contenants vides en matière plastique pressés sous forme de paquet, notamment de bouteilles en PET, avec un moyen de cerclage (2, 2') en forme de cordon qui est placé autour du paquet (10), les zones d'extrémité (3, 4) du moyen de cerclage (2, 2') en forme de cordon étant engagées dans une zone de serrage (5, 6) respective d'un bloc de serrage (1) comportant au moins deux zones de serrage (5, 6) séparées, et retenues dans ces dernières, moyen par lequel le bloc de serrage maintient les zones d'extrémité fixées l'une par rapport à l'autre.

2. Procédé selon la revendication 1, **caractérisé en ce que**, dans le bloc de serrage, les zones d'extrémité (3, 4) sont retenues en traction dans la même direction A.

3. Procédé selon la revendication 1, **caractérisé en ce que**, dans le bloc de serrage, les zones d'extrémité (3, 4) sont retenues en traction dans différentes directions, notamment dans des directions B, C opposées.

4. Procédé selon l'une des revendications 1 à 3, **caractérisé en ce que** l'engagement des zones d'extrémité (3, 4) du moyen de cerclage dans les zones de serrage (5, 6) du bloc de serrage est effectué automatiquement par au moins un dispositif d'amenée mécanique.

5. Procédé selon l'une des revendications 1 à 4, **caractérisé en ce que**, à la sortie de la zone de serrage, le moyen de cerclage est coudé, et notamment dévié de l'ordre de 90°.

6. Procédé selon la revendication 5, **caractérisé en ce que**, lorsqu'il est coudé ou dévié, le moyen de cerclage s'étend au moins partiellement dans une encoche (7, 8) du bloc de serrage.

7. Procédé selon l'une des revendications 1 à 6, **caractérisé en ce que** plusieurs blocs de serrage sont maintenus empilés, et amenés successivement aux objets à cercler.

8. Procédé selon l'une des revendications 1 à 7, **caractérisé en ce qu'**au moins un moyen de cerclage (2, 2') est placé autour du paquet (10) à l'état pressé de celui-ci, et fixé par les zones d'extrémité dans le bloc de serrage (1).

9. Bloc de serrage (1) destiné à la mise en oeuvre du procédé selon l'une des revendications 1 à 8, comportant sur ses parois de rainure (14 à 17) des organes de préhension (11, 12) s'étendant obliquement par rapport au fond de rainure (18, 19), le bloc de serrage (1) étant doté d'au moins deux zones de serrage (5, 6) séparées, formées par des rainures séparées (14, 15, 18 ; 16, 17, 19) munies d'organes de préhension (11, 12), **caractérisé en ce que** le bloc de serrage comporte trois barrettes (24, 25, 26) dépassant d'une surface de fond (20), qui forment entre elles les zones de serrage (5, 6).

10. Bloc de serrage selon la revendication 9, **caractérisé en ce que** les organes de préhension (11, 12) des deux zones de serrage (5, 6) sont inclinés sensiblement dans la même direction par rapport à la surface de fond de la rainure.

11. Bloc de serrage selon la revendication 9, **caractérisé en ce que** les organes de préhension (11, 12) des deux zones de serrage (5, 6) sont inclinés sensiblement dans des directions opposées par rapport à la surface de fond de la rainure.

12. Bloc de serrage selon l'une des revendications 9 à 11, **caractérisé en ce qu'**il comporte au moins une encoche (7, 8), qui est prévue au niveau de l'emplacement de sortie respectif du bloc de serrage en s'étendant de façon coudée par rapport à l'extension de la rainure, en particulier sensiblement à angle droit par rapport à l'extension de la rainure.

13. Bloc de serrage selon l'une des revendications 9 à 12, **caractérisé en ce que** ses parois latérales extérieures (24, 26) sont pourvues de nervures de renforcement (21)

14. Bloc de serrage selon l'une des revendications 1 à 13, **caractérisé en ce qu'**il est pourvu extérieurement de surfaces de guidage (22, 23), qui définissent latéralement sur le bloc au moins un plan positionné pour l'essentiel perpendiculairement à la surface de fond (20).

15. Bloc de serrage selon la revendication 9, **caractérisé en ce qu'**au moins une face frontale (28) de l'une des deux barrettes extérieures (24, 26) présente une extension oblique par rapport à la surface de fond, de telle sorte qu'un élément (2) en forme de cordon s'appliquant sous traction contre la face frontale soit guidé en direction de la surface de fond (20).
